# EUROPEAN PATENT SPECIFICATION

(11) **EP 0 672 546 B1**
(45) Date of publication and mention of the grant of the patent: **29.07.1998**
(21) Application number: 95301734.0
(22) Date of filing: 15.03.1995
(51) Int. Cl.: B60C 9/00

(54) **Strengthening support for vehicle tyres**
Verstärkung für Fahrzeugreifen
Renfort pour bandages pneumatiques

(30) Priority: 17.03.1994 DE 4409182
(43) Date of publication of application: 20.09.1995
(73) Proprietor: Dunlop GmbH, 63450 Hanau (DE)
(72) Inventor: Hamacher, Wilhelm, Dipl.-Ing., D-63486 Bruchkobel (DE)
(74) Representative: Stewart, Charles Geoffrey

(56) References cited:
- EP-A- 0 225 055
- EP-A- 0 433 962
- EP-A- 0 502 729
- EP-A- 0 543 640
- EP-A- 0 566 392
- WO-A-80/00069
- DE-A- 2 808 136
- FR-A- 2 419 997
- FR-A- 2 472 040
- FR-A- 2 476 548
- US-A- 2 067 405
- US-A- 3 090 190
- US-A- 4 738 096
- US-A- 4 836 262

## Description

The invention relates to a strengthening support for vehicle tyres. Strengthening supports can be provided in the carcass and in the breaker of vehicle tyres in order to improve the physical properties of tyres, in particular in relation to dynamic loads.

Known strengthening supports for vehicle tyres comprises multiple wires with, in each case, at least two filaments or wires twisted with one another. In particular in the breaker of vehicle tyres, the wires are usually made of steel and thus results in a considerable increase of tyre weight.

For example EP-A-0433962 discloses cords comprising between two and five wires of circular cross-section, one of which may be waved, entwisted together. EP-A-0566392 discloses another cord having plural inner filaments of circular cross-section wrapped by an outer filament of flattened cross-section. WO-80/00069 discloses a tyre cord comprising plural high strength filaments wrapped around a core providing strengthening support for the cord during the tyre manufacturing process.

However, nowadays, the maximum possible weight reduction of vehicle tyres is sought, above all, in order to reduce the fuel consumption of the vehicle. On the other hand, high physical requirements need to be fulfilled by modern vehicle tyres, in particular in relation to dynamic loads and this makes the use of correspondingly large strengthening supports necessary.

It is therefore the object of the invention to provide a strengthening support for vehicle tyres with a weight which is as low as possible and which, nevertheless, achieves an adequate improvement of the physical properties of the vehicle tyre.

This object is satisfied in accordance with the invention by a strengthening support for reinforcing vehicle tyres, being in the form of individual wires which have a geometry which lends an additional elasticity in the longitudinal direction to each such individual wire characterised in that the individual wires are flattened off having a substantially rectangular cross-section which amounts to between 0.2 x 0.35mm and 0.3 x 0.5mm and are twisted about their longitudinal axis.

In conventional experience, strengthening supports in the form of individual wires are not capable of coping to a sufficient degree with dynamic loads which occur, in particular in compression. However as a result of the arrangement of the individual wires in accordance with the invention with a geometry which lends an additional elasticity in the longitudinal direction, strengthening supports can now be provided which have a lower weight than conventional strengthening supports and, nevertheless, satisfy the physical requirements, in particular with regard to the dynamic loadability.

In order to achieve an additional elasticity in the longitudinal direction, the individual wires are twisted about their longitudinal axis and can be waved in the longitudinal direction, or can have a spiral form, wherein the length of lay or twist, i.e. the separation of two geometrically equivalent points of these individual wires amounts preferably to 10-25mm. A geometry of this kind can reach right into the plastic region via a deformation of the initially straight individual wires.

A very simple method of providing individual wires having a geometry of this kind is to strand two or more unformed individual wires in a known manner, i.e. to twist them under appropriate tension initially in one direction and subsequently in the opposite direction. By untwining the cord obtained in this manner, one obtains a corresponding number of individual wires which have a waved or spiral geometry by reason of the plastic deformation from the stranding.

The geometry can, of course, also be produced in other ways, for example by pulling the wire over a correspondingly formed roll. What is important is that a permanent plastic deformation takes place which leads to the desired geometry giving an additional elasticity in the longitudinal direction of the wire.

A lay length or twist length of 10-25mm has proved to be specially suitable for giving the individual wires the desired physical properties.

By using chamfered or flattened off individual wires, so-called flat-wire, which preferably have a substantially rectangular cross-section of between 0.2 x 0.35mm and 0.3 x 0.5mm, the physical properties of the strengthening support, and thus the vehicle tyre, can be improved with unchanged weight. The stiffness of the individual wire against bending or twisting is increased by the flattening off. This evidences itself in the deformed individual wire in the sense of a further increase of the elasticity in the longitudinal direction.

The individual wires are preferably coated with rubber in order to effect a better connection with the other parts of the tyre. In this so-called calendering a tensile force is exerted in the longitudinal direction of the individual wire which at least partially cancels out the previous plastic deformation. This can be taken account of by correspondingly stronger deformation.

Another possibility is to associate a tensile support or carrier with each individual wire, this tensile support is preferably made of a textile material on weight grounds. The tensile support than substantially takes up the tensile force during calendering so that the plastic deformation of the individual wire is substantially maintained.

In this latter embodiment, the individual wire can be stranded about the tensile support, so that the individual wire adopts a slightly spiral form giving it the desired additional elasticity in the longitudinal direction. A textile strengthening support can also be selected as the tensile support in order to exert an additional positive influence on the physical properties of the vehicle tyre.

By counting the individual wires, the rubber layer deposited by the calendering is advantageously thinner than in known strengthening supports.

The strengthening support in accordance with the invention can in particular be used in a carcass and/or in a breaker ply of a vehicle tyre.

The individual wires of the strengthening support for use as a breaker ply can preferentially be formed of steel.

An embodiment of the invention is shown in the drawing and is described in the following. In the drawings:
Figure 1 is a schematic side view of an individual wire having a wave-shaped geometry;
Figure 2 is a schematic side view an individual wire having a spiral geometry;
Figure 3 is a cross-section through a flattened individual wire of the invention; and
Figure 4 is a schematic side view of the embodiment of Figure 3.

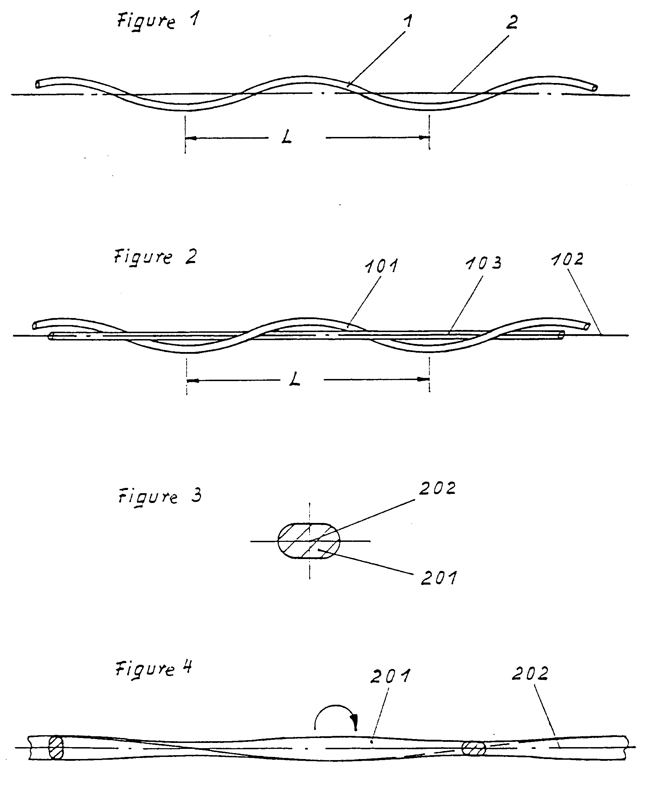

The individual wire 1 of Figure 1 has a wave-shaped geometry. The individual wire 1 is thus two-dimensionally deformed in relation to an undeformed individual wire in the manner of a wave extending on either side of the central longitudinal axis 2 of the individual wire 1. The lay length or twist length 1 of this wave preferably amounts to 10-25mm.

In the variant of Figure 2, the individual wire 101 is three-dimensionally deformed in relation to an undeformed individual wire. The individual wire 101 has the form of a spiral wound around the central longitudinal axis 102 of the individual wire and has a lay length L between geometrically equivalent points of preferably 10-25mm. In the variant of Figure 2, a tensile support 103 preferably comprised of a textile material extends along the central longitudinal axis 102. This substantially takes up the tensile forces during the calendering of the individual wire so that the deformation of the individual wire 101 is retained.

In contrast to a circular cross-section the individual wire 201 of the invention is, as shown in Figure 3, flattened off to a so-called flat-wire. The individual wire 201 has in this case a substantially rectangular cross-section preferably amounting to between 0.2 x 0.35mm and 0.3 x 0.5mm.

As shown in Figure 4, the flat-wire 201 of the Figure 3 embodiment can be twisted about its longitudinal axis 202. An additional elasticity in the longitudinal direction can also be given to the individual wire 201 in this way.

The production of the individual wire 1 of Figure 1 can be achieved by conventional stranding of two or more individual wires, i.e. by twisting the individual wires in one direction and subsequently twisting them in the opposite direction, in each case under tensions, and finally be unravelling the stranded individual wires once again.

The individual wire 101 of Figure 2 can be produced by stranding an individual wire 101 about a tensile support 102. When a textile tensile support 102 is used, the individual wire 101 adopts a spiral form. The stranding process is carried out in a similar manner to the stranding of a plurality of individual wires.

Textile strengthening supports what can be used as the tensile support may be made of PET, nylon or aramid in the titres 420, 750, 840, 1400, 1880 and 2100 dtex, i.e. grammes per 10 000 metres, and either as multifilament or as monofilament tensile supports. A rubber-friendly impregnation or coating assists the connection and bonding to the tyre material.

The degree of twisting, waving or spiralling of the individual wires is selected corresponding to the desired physical properties of the strengthening support. Dynamic loads of the strengthening support are at least partially taken up by the geometrical structure so that the predetermined physical requirements are fulfilled by the individual wire of the invention.

## Claims

1. A strengthening support for reinforcing vehicle tyres, being in the form of individual wires (201) which have a geometry which lends an additional elasticity in the longitudinal direction to each such individual wire characterised in that the individual wires (201) are flattened off having a substantially rectangular cross-section which amounts to between 0.2 x 0.35mm and 0.3 x 0.5mm and are twisted about their longitudinal axis (202).

2. A strengthening support in accordance with claim 1, characterised in that the individual wires (201) are waved in the longitudinal direction.

3. A strengthening support in accordance with claim 1 or 2, characterised in that the individual wires (201) are spiralled.

4. A strengthening support in accordance with any one of the preceding claims, characterised in that the length (L) of lay or twist, i.e. the separation of two geometrically equivalent points of individual wires having such a geometry, amounts to 10-25mm.

5. A strengthening support in accordance with any one of the preceding claims, characterised in that the individual wires (201) are coated with rubber.

6. A strengthening support in accordance with claim 5, characterised in that each individual wire (201) is associated with a tensile support (103), preferably made of textile material.

7. A strengthening support in accordance with claim 6, characterised in that the individual wires (201) are stranded about the tensile support (103).

8. A vehicle tyre having a carcass and/or a breaker with a strengthening support in accordance with any one of the preceding claims.

## Patentansprüche

1. Ein Festigkeitsträger zum Verstärken von Fahrzeugreifen, der in Form einzelner Drähte (201) vorliegt, die eine Geometrie besitzen, welche jedem derartigen einzelnen Draht eine zusätzliche Elastizität in der longitudinalen Richtung verleiht,
dadurch **gekennzeichnet**,
daß die einzelnen Drähte (201) abgeflacht sind, wobei sie einen im wesentlichen rechteckigen Querschnitt aufweisen, der sich auf zwischen 0,2 x 0,35 mm und 0,3 x 0.5 mm beläuft, und um ihre longitudinale Achse (202) verdreht sind.

2. Ein Festigkeitsträger nach Anspruch 1,
dadurch **gekennzeichnet**,
daß die einzelnen Drähte (201) in der longitudinalen Richtung gewellt sind.

3. Ein Festigkeitsträger nach Anspruch 1 oder 2,
dadurch **gekennzeichnet**,
daß die einzelnen Drähte (201) spiralförmig ausgebildet sind.

4. Ein Festigkeitsträger nach einem der vorhergehenden Ansprüche,
dadurch **gekennzeichnet,**
daß die Schlag- oder Verdrehungslänge (L), d. h. der Abstand zweier geometrisch äquivalenter Punkte einzelner Drähte mit einer derartigen Geometrie, sich auf 10-25 mm beläuft.

5. Ein Festigkeitsträger nach einem der vorhergehenden Ansprüche,
dadurch **gekennzeichnet**,
daß die einzelnen Drähte (201) mit Gummi überzogen sind.

6. Ein Festigkeitsträger nach Anspruch 5,
dadurch **gekennzeichnet**,
daß jeder einzelne Draht (201) einem Zugträger (103) zugeordnet ist, der bevorzugt aus textilem Material besteht.

7. Ein Festigkeitsträger nach Anspruch 6,
dadurch **gekennzeichnet**,
daß die einzelnen Drähte (201) um den Zugträger (103) geflochten sind.

8. Ein Fahrzeugreifen mit einer Karkasse und/oder einem Breaker mit einem Festigkeitsträger gemäß einem der vorhergehenden Ansprüche.

## Revendications

1. Renfort de pneumatiques de véhicule, sous forme de fils métalliques individuels (201) qui ont une configuration géométrique qui se prête à l'obtention d'une élasticité supplémentaire dans la direction longitudinale de chaque fil métallique individuel, caractérisé en ce que les fils individuels (201) sont aplatis à une section pratiquement rectangulaire qui est comprise entre 0,2 x 0,35 mm et 0,3 x 0,5 mm, et sont retordus autour de leur axe longitudinal (202).

2. Renfort selon la revendication 1, caractérisé en ce que les fils métalliques individuels (201) sont ondulés en direction longitudinale.

3. Renfort selon la revendication 1 ou 2, caractérisé en ce que les fils individuels (201) sont spiralés.

4. Renfort selon l'une quelconque des revendications précédentes, caractérisé en ce que la longueur (L) du pas ou de la torsion, c'est-à-dire la distance séparant deux points géométriquement équivalents des fils métalliques individuels ayant cette configuration géométrique, est comprise entre 10 et 25 mm.

5. Renfort selon l'une quelconque des revendications précédentes, caractérisé en ce que les fils métalliques individuels (201) sont revêtus de caoutchouc.

6. Renfort selon la revendication 5, caractérisé en ce que chaque fil individuel (201) est associé à un support (103) résistant à la traction et de préférence formé d'un matériau textile.

7. Renfort selon la revendication 6, caractérisé en ce que les fils métalliques individuels (201) sont disposés sous forme de brins autour du support (103) qui résiste à la traction.

8. Pneumatique pour véhicule possédant une carcasse et/ou une nappe sommet ayant un renfort selon l'une quelconque des revendications précédentes.
